(19) Europäisches Patentamt
European Patent Office
Office européen des brevets

(11) **EP 2 128 787 A1**

## (12) EUROPEAN PATENT APPLICATION

(43) Date of publication:
**02.12.2009 Bulletin 2009/49**

(21) Application number: **09151793.8**

(22) Date of filing: **30.01.2009**

(51) Int Cl.:
*G06K 7/00* (2006.01)　　　*H01Q 19/22* (2006.01)
*H01Q 1/22* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **26.05.2008 JP 2008137229**

(71) Applicant: **Fujitsu Ltd.
Kawasaki-shi, Kanagawa 211-8588 (JP)**

(72) Inventors:
• **Yamagajo, Takashi
Kawasaki-shi,
Kanagawa 211-8588 (JP)**

• **Maniwa, Toru
Kawasaki-shi,
Kanagawa 211-8588 (JP)**
• **Ninomiya, Teruhisa
Kawasaki-shi,
Kanagawa 211-8588 (JP)**

(74) Representative: **Fenlon, Christine Lesley
Haseltine Lake LLP
Lincoln House, 5th Floor
300 High Holborn
London WC1V 7JH (GB)**

### (54) Container and wireless tag reading system

(57)　　The container for accommodating at least one article bearing a wireless tag that wirelessly communicates with a reader/writer antenna includes a conductor which electromagnetically couples with an antenna of the wireless tag when an interrogation signal is radiated from the reader/writer antenna toward the wireless tag or when a response signal is radiated from the wireless tag toward the reader/writer antenna.

FIG. 1

EP 2 128 787 A1

**Description**

CROSS-REFERENCE TO RELATED APPLICATION

The Applicant is based upon and claims the benefit of priority of the prior Japanese Patent Application No. 2008-137229, filed on May 26, 2008, and the entire content of JP 2008-137229 is hereby incorporated by reference.

FIELD

The embodiments discussed herein are directed to a container. The embodiments are directed to a container for accommodating a plurality of articles bearing wireless tags, and a wireless tag reading system for reading information from the wireless tag attached to each individual article contained in the container.

BACKGROUND

In recent years, systems that use radio frequency identification (hereinafter abbreviated RFID) technology have come into wide use in such applications as inventory management and logistics management. An RFID system includes a reader/writer and a wireless tag attached to each article or the like to be managed, and wireless communications are performed between the reader/writer and the wireless tag. The reader/writer is capable of identifying each individual wireless tag by reading the identification information, etc. stored on the wireless tag. The system can thus manage each individual article to which such a wireless tag is attached.
However, when managing articles such as postal mails by using the wireless tags attached to them, a plurality of such articles may be placed in a single container. In such cases, since the wireless tags are located close to each other, the wireless tags may interfere with each other during communication with the reader/writer, and the communication range between the reader/writer and the wireless tags may become shorter, making it difficult for the reader/writer to read some of the wireless tags. To solve this problem, Japanese Unexamined Patent Publication No. 2005-327099 discloses a wireless tag reading apparatus that makes it possible to read each individual wireless tag by arranging a plurality of passive elements, each formed from a conductor, between a reader/writer and a container capable of accommodating a plurality of articles bearing wireless tags.
However, the wireless tag reading apparatus disclosed in Japanese Unexamined Patent Publication No. 2005-327099 has the problem that the overall size of the apparatus increases because of the plurality of passive elements that have to be arranged between the reader/writer and the container.

SUMMARY

Accordingly, it is an object in one aspect of the embodiment to provide a container for use in a wireless tag reading system, wherein even when a plurality of articles bearing wireless tags are contained in the container, each individual wireless tag can be read by a reader/writer without necessitating increasing the system size.
According to one embodiment, there is provided a container for accommodating at least one article bearing a wireless tag. The container includes a conductor which electromagnetically couples with an antenna of the wireless tag when an interrogation signal is radiated from a reader/writer antenna toward the wireless tag or when a response signal is radiated from the wireless tag toward the reader/writer antenna.
According to another embodiment, there is provided a wireless tag reading system. The wireless tag reading system includes: a container for accommodating at least one article bearing a wireless tag; a reader/writer antenna for transmitting an interrogation signal to the wireless tag and for receiving a response signal from the wireless tag; a reader/writer for acquiring information concerning the wireless tag from the response signal received from the wireless tag via the reader/writer antenna; and a conductor attached to the container in such a manner as to electromagnetically couple with an antenna of the wireless tag when the interrogation signal or the response signal is radiated.
The object and advantages of the invention will be realized and attained by means of the elements and combinations particularly pointed out in the claims.
It is to be understood that both the foregoing general description and the following detailed description are exemplary and explanatory and are not restrictive of the invention, as claimed.

BRIEF DESCRIPTION OF THE DRAWINGS

Figure 1 is a schematic diagram depicting the configuration of a wireless tag reading system according to a first embodiment;

Figure 2 is a placement diagram depicting the positional relationship between a reader/writer antenna, a wireless tag, and a conductor;

Figure 3A is a diagram depicting the relationship between the wireless tag and the coordinate system defined in a first simulation;

Figure 3B is a placement diagram depicting the placement of the wireless tag and the conductor relative to the reader/writer antenna in the first simulation;

Figure 3C is a placement diagram depicting the placement of the wireless tag and the conductor relative to the reader/writer antenna in the first simulation;

Figure 4A is a graph depicting the results of calculations, in the first simulation, of the antenna gains of various wireless tags for the case where the conductor is provided for comparison with the case where the conductor is not provided;

Figure 4B is a graph depicting the results of calculations, in the first simulation, of the communication ranges of various wireless tags for the case where the conductor is provided for comparison with the case where the conductor is not provided;

Figure 5 is a diagram depicting the positional relationship of the conductors relative to the wireless tags in a second simulation;

Figure 6A is a graph depicting the results of calculations, in the second simulation, of the antenna gains of various wireless tags for the case where the conductors are provided for comparison with the case where the conductors are not provided;

Figure 6B is a graph depicting the results of calculations, in the second simulation, of the communication ranges of various wireless tags for the case where the conductors are provided for comparison with the case where the conductors are not provided;

Figure 7A is a graph depicting the results of calculations, in a third simulation, of the communication ranges of various wireless tags for the case where the conductor is placed 15 mm away from the center of each wireless tag, for comparison with the case where the conductor is not provided;

Figure 7B is a graph depicting the results of calculations, in the third simulation, of the communication ranges of various wireless tags for the case where the conductor is placed 20 mm away from the center of each wireless tag, for comparison with the case where the conductor is not provided;

Figure 8A is a graph depicting the results of calculations, in the third simulation, of the communication ranges of various wireless tags for the case where the conductor is placed 22.5 mm away from the center of each wireless tag, for comparison with the case where the conductor is not provided;

Figure 8B is a graph depicting the results of calculations, in the third simulation, of the communication ranges of the wireless tags for the case where the conductor is placed 25 mm away from the center of each wireless tag, for comparison with the case where the conductor is not provided;

Figure 9A is a schematic cross-sectional side view of a container in a wireless tag reading system according to a second embodiment; and

Figure 9B is a schematic diagram depicting the configuration of a conductor mounted on a partition plate.

## DESCRIPTION OF EMBODIMENTS

A wireless tag reading system according to a first embodiment will be described below with reference to the relevant drawings.

The wireless tag reading system according to the first embodiment includes a conductor attached to a partition plate provided in a container capable of accommodating a plurality of articles bearing wireless tags. Even when a large number of such articles are contained in the container, the wireless tag reading system makes it possible to read each individual wireless tag by causing electromagnetic coupling between the conductor and the wireless tag and thereby improving the antenna gain of the wireless tag.

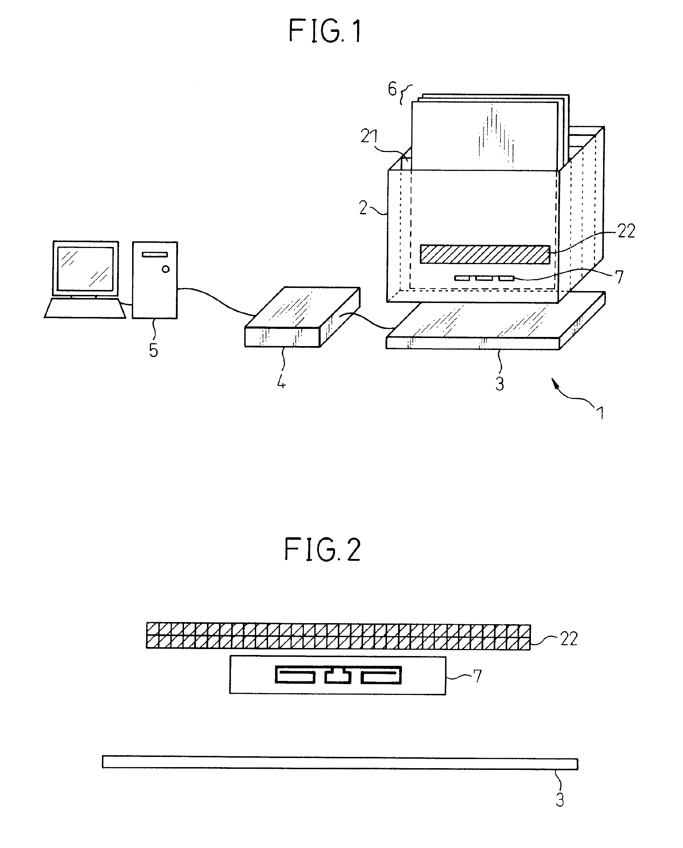

Figure 1 is a schematic diagram depicting the configuration of the wireless tag reading system according to the first embodiment. As illustrated in Figure 1, the wireless tag reading system 1 includes a container 2, a reader/writer antenna 3, a reader/writer 4, and a management apparatus 5. The wireless tag reading system 1 can communicate with the wireless tag 7 attached to each article 6 contained in the container 2 and read information stored on the wireless tag 7.

The reader/writer antenna 3 is installed underneath the container 2. The reader/writer antenna 3 transmits an interrogation signal, generated by the reader/writer 4, toward the wireless tag 7 attached to each article 6 contained in the container 2, and receives a response signal returned from the wireless tag 7. Any of various types of antennas used in RFID systems can be adapted for use as the reader/writer antenna 3. For example, a patch antenna can be used as the reader/writer antenna 3.

The reader/writer 4 includes a microprocessor, a memory and its peripheral circuitry, and a program that runs on the microprocessor. The reader/writer 4 generates the interrogation signal that is transmitted to the wireless tag 7. The interrogation signal includes, for example, a preamble part for synchronizing the interrogation signal at the wireless tag 7, a modulated part which contains command data for controlling the wireless tag 7, and an unmodulated part which the wireless tag 7 modulates using identification information, etc. The reader/writer 4 transmits the interrogation signal via the reader/writer antenna 3 to the wireless tag 7.

When the response signal returned from the wireless tag 7 is received via the reader/writer antenna 3, the reader/writer 4 analyzes the response signal and extracts the identification information of the wireless tag 7 from the response signal. Then, the reader/writer 4 transmits the extracted identification information of the wireless tag 7 to the management apparatus 5 connected to it via a communication line.

The management apparatus 5 is generally a computer, and manages each article 6 contained in the container 2 by storing the identification information of the wireless tag 7 received from the reader/writer 4. The reader/writer 4 and the management apparatus 5 may be combined into one unit.

The articles 6 to be managed are, for example, documents, files, envelopes, patient charts, X-ray photos, etc. that are thin for their width and height. Therefore, a large number of such articles 6 can be placed into the container 2. The wireless tag 7 is attached to the lower part of each article 6.

To implement the function of the wireless tag, the wireless tag 7 includes an antenna and an integrated circuit into which a rectifier circuit, a memory, a microprocessor, etc. are integrated. In the present embodiment, the wireless tag 7 employs a so-called passive system. Further, the wireless tag 7 uses a radiowave having a frequency in the UHF range (for example, 953 MHz) for communication with the reader/writer 4. Therefore, in the wireless tag 7, the rectifier circuit creates DC power from the interrogation signal received via the antenna, and supplies the DC power to power up the microprocessor unit, etc. Then, when the interrogation signal is received from the reader/writer, the microprocessor reads from the memory an identification code for distinguishing the wireless tag 7 from other wireless tags, and generates a response signal by modulating the interrogation signal with the identification code. Here, it will be noted that an active type or a semi-active type wireless tag that generates a response wave by using power supplied from a built-in battery may be used as the wireless tag 7. Further, the frequency of the communication radiowaves used for communication between the wireless tag 7 and the reader/writer 4 (hereinafter called the communication frequency) may be suitably chosen from the frequencies used in RFID systems that use antennas for transmission and reception of the radiowaves; for example, 2.45 GHz in the microwave range may be used.

The container 2 is a receptacle for storing articles 6, and can store up to 30 articles 6. In the present embodiment, the container 2 has a box-like shape whose top is open, and is formed, for example, from a resin or the like. The container 2 has at least one partition plate 21 that partitions the interior space of the container 2. The container 2 can store a plurality of articles 6 between the partition plate 21 and the inner wall of the container 2 or between each pair of partition plates 21.

A tape-like conductor 22 is attached to at least one of the partition plates 21. The conductor 22 is formed from an electrically conductive material, for example, a metal such as aluminum, copper, or iron. The conductor 22 may be attached to the partition plate 21 by any known method; for example, it may be attached to the partition plate 21 by using a glue or a double-sided adhesive tape.

When the response signal is radiated from the antenna of the wireless tag 7, electromagnetic coupling occurs between the conductor 22 and the antenna of the wireless tag 7, and the conductor 22 thus fed from the wireless tag 7 functions as an antenna for transmitting the response signal. Or, when the interrogation signal is radiated from the reader/writer antenna 3, electromagnetic coupling occurs between the conductor 22 and the antenna of the wireless tag 7, and the conductor 22 thus acts to transmit the interrogation signal to the antenna of the wireless tag 7.

Figure 2 depicts the positional relationship between the reader/writer antenna 3, the wireless tag 7, and the conductor 22 when the article 6 is placed in the container 2. As illustrated in Figure 2, the conductor 22 is located farther away from the reader/writer antenna 3 than the wireless tag 7. It is preferable that the distance from the conductor 22 to the center of the antenna of the wireless tag 7, as measured in a direction perpendicular to the antenna surface of the reader/writer antenna 3, is set shorter than or equal to about one tenths of the communication wavelength λ used for communication between the reader/writer antenna 3 and the wireless tag 7. Further, it is preferable that the length of the conductor 22, as measured in a direction substantially parallel to the longitudinal direction of the wireless tag 7 (that is, in the horizontal direction), is set longer than or equal to one half of the communication radiowave wavelength λ. By designing and placing the conductor 22 in this way, electromagnetic coupling occurs between the conductor 22 and the antenna of the wireless tag 7 when the response signal is radiated from the wireless tag 7 or when the interrogation signal is radiated from the reader/writer antenna 3. As a result, the conductor 22 functions as an antenna, and the antenna gain of the wireless tag 7 improves. This serves to increase the communication range between the reader/writer antenna 3 and the wireless tag 7. It is further preferable that the length of the conductor 22, as measured in the direction substantially parallel to the wireless tag 7, is set equal to one half of the communication wavelength λ or to the sum of one half of the communication wavelength λ and an integral multiple of the communication wavelength λ. This is because the conductor 22 can then increase the intensity of the response signal by resonating with the response signal radiated from the wireless tag 7. For details of antenna gain enhancement by electromagnetic coupling, refer to H. W. Son, C.S. Pyo, "Design of RFID tag antennas using an inductively coupled feed," IEEE, Electronics Letters, Sept. 2005, Vol. 41, No. 18, pp. 994-996.

On the other hand, the width of the conductor 22, as measured in a direction substantially perpendicular to the longitudinal direction of the wireless tag 7 (that is, in the vertical direction), is not specifically limited.

The communication range between the reader/writer antenna 3 and the wireless tag 7 in the wireless tag reading system according to the first embodiment was obtained by performing an electromagnetic field simulation using a moment method; the results of the simulation will be described below.

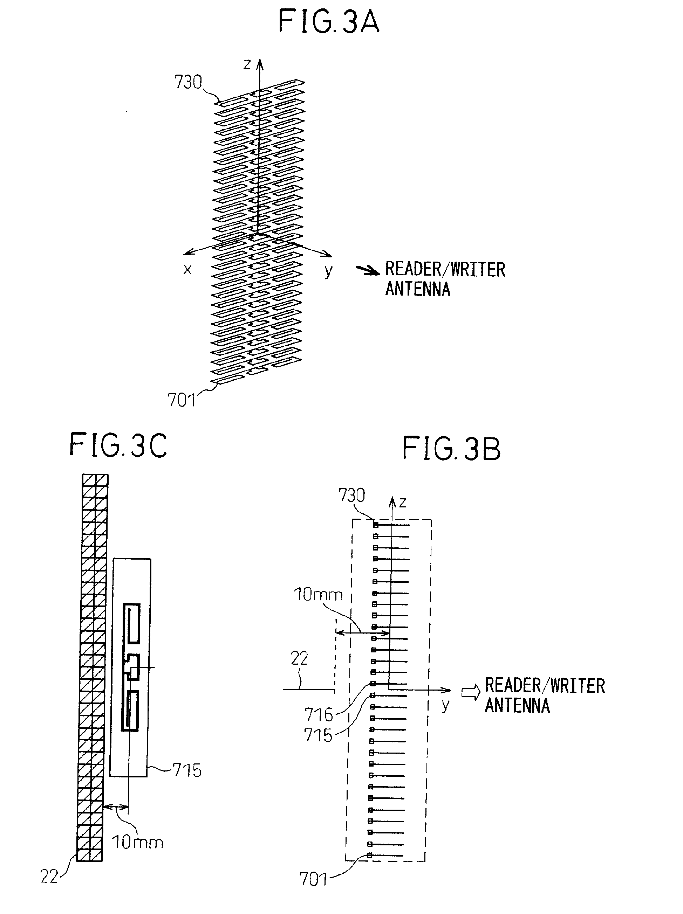

Figure 3A depicts the relationship between the wireless tag and the coordinate system defined in the simulation. Figures 3B and 3C depict the placement of the wireless tag and the conductor relative to the reader/writer antenna. In the simulation, it was assumed that the reader/writer would read the wireless tag attached to a document such as an envelope for the case where 30 wireless tags 701 to 730 were arranged with 2-mm spacing, as illustrated in Figure 3A. To identify the respective wireless tags, the reference numbers were assigned to the wireless tags in increasing order from the bottom to the top, that is, the wireless tag placed at the bottom was assigned the reference numeral 701, and the wireless tag placed at the top was assigned the reference numeral 730. Further, the longitudinal direction of each wireless tag (that is, in Figure 1, the direction parallel to the bottom of the container 2 and parallel to the surface of the article 6) was taken as the x axis. Then, the direction perpendicular to the x axis and extending in the direction that joins the reader/writer antenna 3 to the wireless tag (that is, in Figure 1, the vertical direction or the direction perpendicular to the antenna surface of the reader/writer antenna 3) was taken as the y axis. On the other hand, the direction perpendicular to both the x and y axes and parallel to the stacking direction of the wireless tags (that is, in Figure 1, the direction parallel to the bottom of the container 2 and perpendicular to the surface of the article 5) was taken as the z axis.

In the simulation, by assuming that power would be fed to only one of the wireless tags 701 to 730, the antenna gain Gr and the communication range r of the wireless tag fed with power were obtained. Here, the internal impedance of the feed source that feeds the wireless tag was assumed to be equal to the internal impedance of the integrated circuit contained in the wireless tag. On the other hand, any particular wireless tag not fed with power was assumed to be terminated in an impedance equal to the internal impedance of the integrated circuit contained in that particular wireless tag.

In this case, the matching coefficient q between the antenna and the integrated circuit contained in any one of the wireless tags 701 to 730 is obtained by the following equation.

$$q = \frac{4R_c R_a}{|Z_c + Z_a|^2} \tag{1}$$

In the equation (1), $R_c$ and $Z_c$ are, respectively, the resistance and impedance of the integrated circuit of the wireless tag. The impedance $Z_c$ is expressed as $Z_c = R_c + jX_c$, where $X_c$ is the reactance of the integrated circuit. Similarly, $R_a$ and $Z_a$ are, respectively, the resistance and impedance of the antenna of the wireless tag. The impedance $Z_a$ is expressed as $Z_a = R_a + jX_a$, where $X_a$ is the reactance of the antenna. Here, when the integrated circuit of the wireless tag is expressed by its equivalent circuit, i.e., an RC parallel circuit, $R_c$ and $X_c$ can be obtained by a known method from the resistance $R_{cp}$ and capacitance $C_{cp}$ of the RC parallel circuit. On the other hand, $R_a$ and $X_a$ can be obtained for each wireless tag by this simulation.

The communication range r of each of the wireless tags 701 to 730 is obtained by the following equation.

$$r = \frac{\lambda}{4\pi} \sqrt{\frac{P_t G_t G_r q}{Pth}} \tag{2}$$

In the equation (2), $\lambda$ represents the communication wavelength. $P_t$ and $G_t$ are, respectively, the power and antenna gain of the reader/writer antenna. Gr represents the antenna gain of the wireless tag, while Pth represents the minimum operating power required for the integrated circuit of the wireless tag to operate.

Further, the communication range r obtained by the above equation (2) is for the case where the radiowave radiated from the reader/writer antenna is a linearly polarized wave. When the radiowave radiated from the reader/writer antenna is a circularly polarized wave, the communication range r can be obtained by dividing the value obtained from the equation (2) by $\sqrt{2}$.

A first simulation depicts the results of calculations of the antenna gains Gr and communication ranges r of the wireless tags for the case where only one conductor 22 is provided. The conductor 22 used in this case is formed from aluminum, and the length (width) of the conductor 22 measured in its longitudinal direction and the length (height) measured in its crosswise direction are 160 mm and 10 mm, respectively. It was also assumed that the conductor 22 was located in the center of the stack of the wireless tags 701 to 730 as viewed along the z-axis direction, that is, between the wireless tags 715 and 716. Further, as illustrated in Figures 3B and 3C, it was assumed that the conductor 22 was placed with its edge spaced 10 mm away from the center of each wireless tag (in Figure 3C, only the wireless tag 715 is illustrated) in the y-axis direction. It was also assumed that each wireless tag was surrounded by a dielectric corresponding to paper, the relative dielectric constant and dielectric loss of the dielectric being 3.0 and 0.01, respectively. Table 1 below depicts the values of the parameters used in the first simulation

[TABLE 1]

| PARAMETER | SET VALUE |
|---|---|
| COMMUNICATION WAVELENGTH λ (COMMUNICATION FREQUENCY) | 314.80 mm (953 MHz) |
| RESISTANCE Rcp OF RC PARALLEL EQUIVALENT CIRCUIT OF WIRELESS TAG INTEGRATED CIRCUIT | 410Ω |
| CAPACITANCE Ccp OF RC PARALLEL EQUIVALENT CIRCUIT OF WIRELESS TAG INTEGRATED CIRCUIT | 1.41 pF |
| MINIMUM OPERATING POWER Pth OF WIRELESS TAG INTEGRATED CIRCUIT | -9.00 dBm |
| READER/WRITER POWER Pt | 25.70 dBm |
| READER/WRITER ANTENNA GAIN Gt | 8.00 dBi |

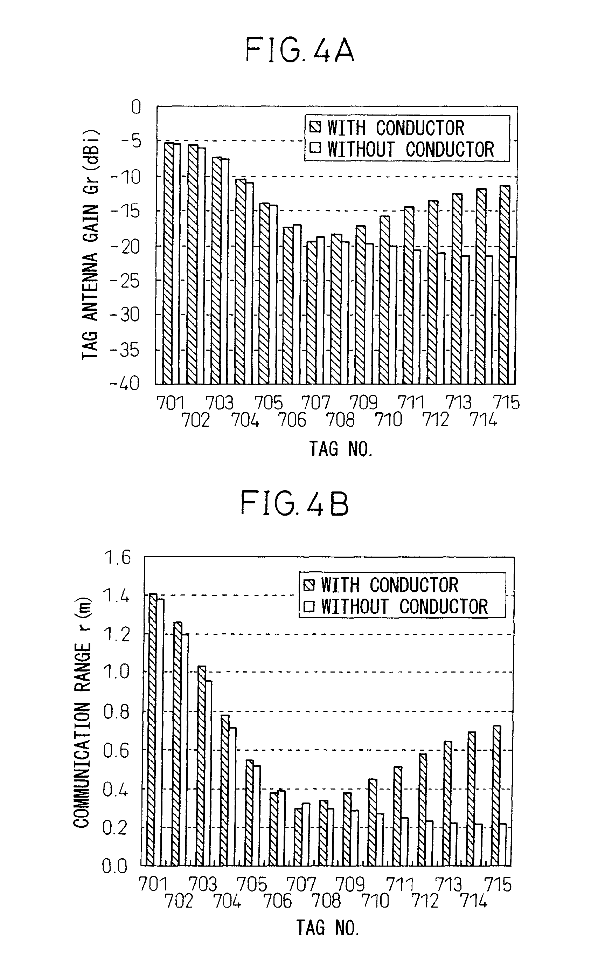

Figure 4A depicts the results of calculations of the antenna gains Gr of the wireless tags for the case where the conductor 22 is provided for comparison with the case where the conductor 22 is not provided. On the other hand, Figure 4B depicts the results of calculations of the communication ranges r of the wireless tags for the case where the conductor 22 is provided for comparison with the case where the conductor 22 is not provided. In Figures 4A and 4B, the wireless tag numbers are illustrated along the horizontal axis. The vertical axes of the graphs in Figures 4A and 4B represent the wireless tag antenna gain Gr and the wireless tag communication range r, respectively, and the results of calculations of the antenna gains Gr and communication ranges r of the wireless tags are illustrated by bar graphs. Further, in Figures 4A and 4B, for each wireless tag, the left-side bar depicts the calculation result for the case where the conductor 22 is provided, and the right-side bar depicts the calculation result for the case where the conductor 22 is not provided. The wireless tags 701 to 715 and the wireless tags 730 to 716 are symmetrically arranged relative to the xy plane passing through the conductor 22, and the communication ranges r and antenna gains Gr of the wireless tags 730 to 716 are the same as those of the wireless tags 701 to 715. Accordingly, Figures 4A and 4B depict the results of calculations only for the wireless tags 701 to 715.

As illustrated in Figure 4A, when the conductor 22 is provided, the antenna gains Gr of the wireless tags 709 to 715 located near the center of the wireless tag stack improve compared with the case where the conductor 22 is not provided. As a result, as illustrated in Figure 4B, when the conductor 22 is provided, the communication ranges r of the wireless tags 709 to 715 improve compared with the case where the conductor 22 is not provided. In particular, the wireless tags located nearer to the conductor 22 have longer communication ranges r. This presumably depicts that electromagnetic coupling occurs between the conductor 22 and the respective wireless tags 709 to 715 and the conductor 22 fed from the wireless tags 709 to 715 radiates radiowaves toward the reader/writer antenna 3. When the conductor 22 is not provided, the shortest communication range among the communication ranges calculated for the respective wireless tags is 21.5 cm (for the wireless tag 715). By contrast, when the one conductor 22 is placed near the center of the wireless tag stack, the shortest communication range among the communication ranges calculated for the respective wireless tags is 29.4 cm (for the wireless tag 707). Thus, in the first simulation, it is illustrated that by providing the conductor 22, the shortest communication range increases by about 8 cm, that is, the shortest communication range improves by about 37%.

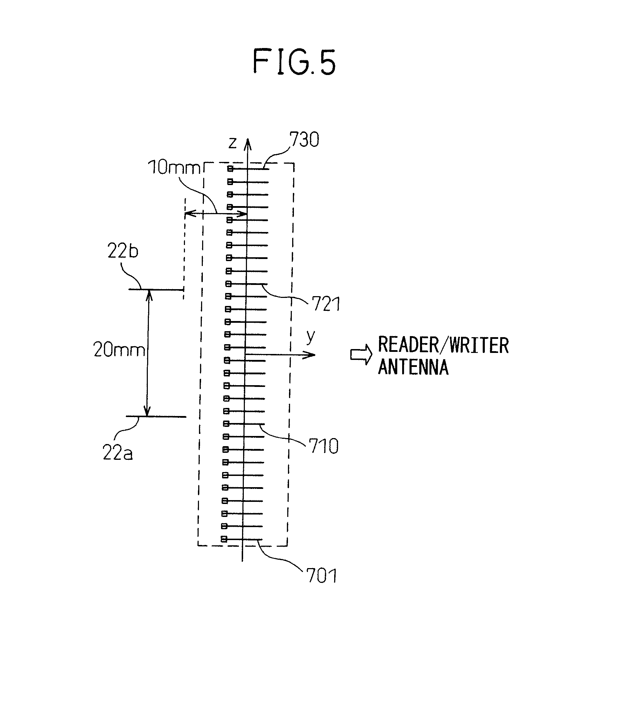

Next, a second simulation depicts the results of calculations of the antenna gains Gr and communication ranges r of the wireless tags for the case where two conductors are provided. Figure 5 depicts the positional relationship of the conductors relative to the wireless tags in the second simulation. As illustrated in Figure 5, the conductors 22a and 22b are spaced 20 mm away from each other so as to be symmetrically located relative to the xy plane passing through the center of the stack of the wireless tags 701 to 730 (that is, the conductors 22a and 22b are located near the wireless tags 710 and 721, respectively). Further, the conductors 22a and 22b are placed so that their edges are spaced 10 mm away from the center of the antenna of each wireless tag in the y-axis direction. The material and shape of the conductors 22a and 22b used here are the same as the material and shape of the conductor 22 used in the first simulation. In the second simulation also, the values illustrated in Table 1 are used for the respective parameters. Further, as in the first embodiment, it was assumed that each wireless tag was surrounded by a dielectric, the relative dielectric constant and dielectric loss of the dielectric being 3.0 and 0.01, respectively.

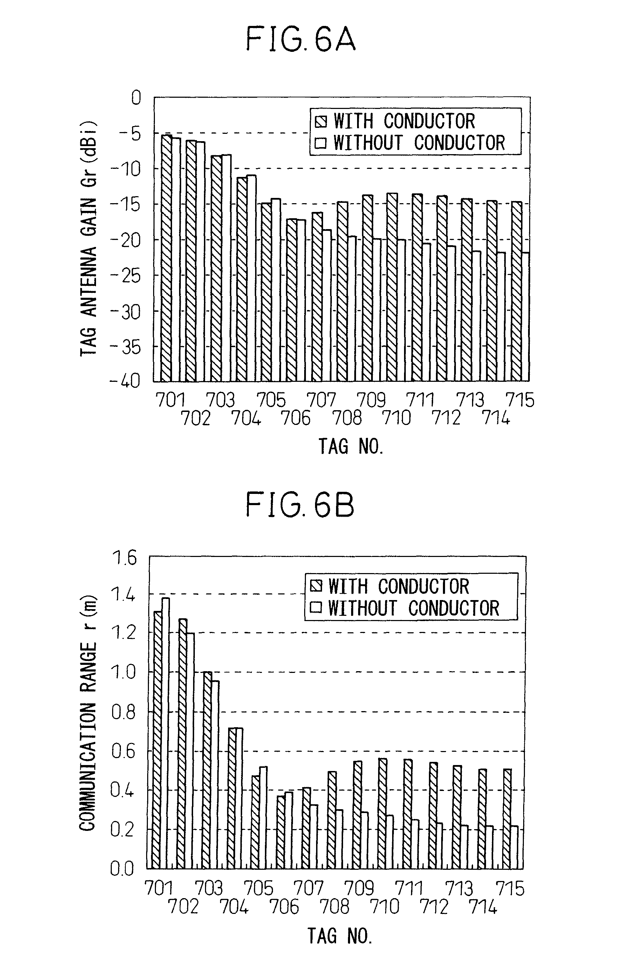

Figure 6A depicts the results of calculations of the antenna gains Gr of the wireless tags for the case where the two conductors 22a and 22b are provided for comparison with the case where such conductors are not provided. On the other hand, Figure 6B depicts the results of calculations of the communication ranges r of the wireless tags for the case where the two conductors 22a and 22b are provided for comparison with the case where the conductors are not provided. In Figures 6A and 6B, the wireless tag numbers are illustrated along the horizontal axis. The vertical axes of the graphs in Figures 6A and 6B represent the wireless tag antenna gain Gr and the wireless tag communication range r, respectively, and the results of calculations of the antenna gains Gr and communication ranges r of the wireless tags are illustrated by bar graphs. Further, in Figures 6A and 6B, for each wireless tag, the left-side bar depicts the calculation result for the case where the conductors 22a and 22b are provided, and the right-side bar depicts the calculation result for the case where the conductors are not provided. The wireless tags 701 to 715 and the wireless tags 730 to 716 are symmetrically arranged relative to the xy plane passing through the center of the stack of the wireless tags 701 to 730, and the communication ranges r and antenna gains Gr of the wireless tags 730 to 716 are the same as those of the wireless tags 701 to 715. Accordingly, Figures 6A and 6B depict the results of calculations only for the wireless tags 701 to 715.

As illustrated in Figure 6A, when the two conductors 22a and 22b are provided, the antenna gains Gr of the wireless tags 707 to 715 located near the center of the wireless tag stack and near the conductor improve compared with the case where the conductors are not provided. Further, as illustrated in Figure 6B, when the conductors 22a and 22b are provided, the communication range of the wireless tag 706 becomes somewhat shorter compared with the case where the conductors are not provided. For the wireless tags 707 to 715 located nearer to the conductor 22a, however, when the conductors 22a and 22b are provided, the communication range r increases compared with the case where the conductors are not provided. As a result, when the conductors 22a and 22b are provided, the shortest communication range among the communication ranges r calculated for the respective wireless tags is 37 cm (for the wireless tag 706). This depicts that, by providing the two conductors 22a and 22b, the shortest communication range can be increased by about 15 cm, compared with the case where the conductors are not provided.

A third simulation depicts the results of calculations of the communication ranges r of the wireless tags for the case where one conductor 22 is placed near the center of the stack of the wireless tags 701 to 730, as in the first simulation, but the distance between the conductor 22 and the wireless tags as measured in the y-axis direction is changed variously. In this simulation, the distance from the edge of the conductor 22 to the center of each wireless tag, as measured in the y-axis direction, is set to 15 mm (about 1/21 of the communication wavelength $\lambda$), 20 mm (about 1/16 of the communication wavelength $\lambda$), 22.5 mm (about 1/14 of the communication wavelength $\lambda$), and 25 mm (about 1/13 of the communication wavelength $\lambda$), respectively. The simulation conditions except for the distance are the same as those used in the first simulation.

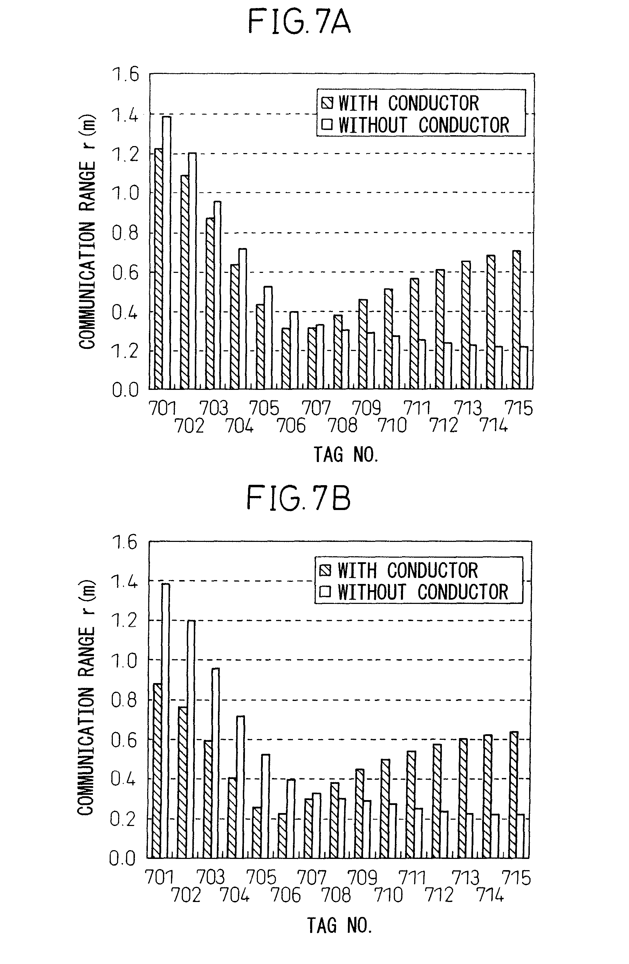

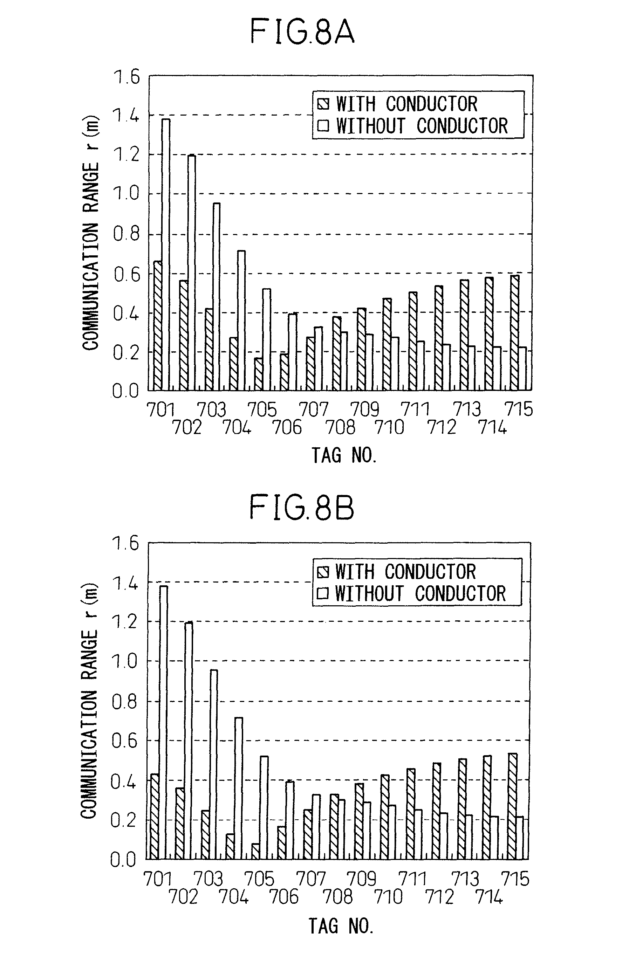

Figure 7A depicts the wireless tag communication ranges r of the wireless tags for the case where the conductor 22 is placed at a distance spaced 15 mm away from the center of the antenna of each wireless tag in the y-axis direction, for comparison with the case where the conductor is not provided. Figure 7B depicts the wireless tag communication ranges r of the wireless tags for the case where the conductor 22 is placed at a distance spaced 20 mm away from the center of the antenna of each wireless tag in the y-axis direction, for comparison with the case where the conductor is not provided. Further, Figure 8A depicts the wireless tag communication ranges r of the wireless tags for the case where the conductor 22 is placed at a distance spaced 22.5 mm away from the center of the antenna of each wireless tag in the y-axis direction, for comparison with the case where the conductor is not provided. Figure 8B depicts the wireless tag communication ranges r of the wireless tags for the case where the conductor 22 is placed at a distance spaced 25 mm away from the center of the antenna of each wireless tag in the y-axis direction, for comparison with the case where the conductor is not provided.

In Figures 7A and 7B and Figures 8A and 8B, the wireless tag numbers are illustrated along the horizontal axis. The vertical axes of the graphs in Figures 7A and 7B and Figures 8A and 8B represent the communication ranges r, and the results of calculations of the communication ranges r of the wireless tags are illustrated by bar graphs. Further, in Figures 7A and 7B and Figures 8A and 8B, for each wireless tag, the left-side bar depicts the calculation result for the case where the conductor 22 is provided, and the right-side bar depicts the calculation result for the case where the conductor is not provided. The wireless tags 701 to 715 and the wireless tags 730 to 716 are symmetrically arranged relative to the xy plane passing through the conductor 22, and the communication ranges r of the wireless tags 730 to 716 are the same as those of the wireless tags 701 to 715. Accordingly, Figures 7A and 7B and Figures 8A and 8B depict the results of calculations only for the wireless tags 701 to 715.

As illustrated in Figure 7A, when the conductor 22 is placed at a distance spaced 15 mm away from the center of the antenna of each wireless tag in the y-axis direction, the communication ranges r of the wireless tags 708 to 715 improve compared with the case where the conductor is not provided. In particular, the wireless tags located nearer to the conductor 22 have longer communication ranges r. This presumably depicts that electromagnetic coupling occurs between the conductor 22 and the respective wireless tags 708 to 715 and the conductor 22 fed from the wireless tags 708 to 715 radiates radiowaves toward the reader/writer antenna 3. The shortest communication range is 30.5 cm (for the wireless tag 706). In this way, when the conductor 22 is placed at a distance spaced 15 mm away from the center of the antenna of each wireless tag in the y-axis direction, the shortest communication range becomes about 9 cm longer than the shortest communication range (21.5 cm) when the conductor is not provided. That is, by placing the conductor 22 as described above, the shortest communication range improves by about 42%.

Likewise, as illustrated in Figure 7B, when the conductor 22 is placed at a distance spaced 20 mm away from the center of the antenna of each wireless tag in the y-axis direction, the communication ranges r of the wireless tags 708 to 715 also increase compared with the case where the conductor is not provided. Of the communication ranges calculated for the wireless tags, the shortest communication range is 22.2 cm (for the wireless tag 706). In this way, when the conductor 22 is placed at a distance spaced 20 mm away from the center of the antenna of each wireless tag in the y-axis direction, the shortest communication range slightly improves compared with the shortest communication range (21.5 cm) when the conductor is not provided.

Next, as can be seen from Figure 8A, when the conductor 22 is placed at a distance spaced 22.5 mm away from the center of the antenna of each wireless tag in the y-axis direction, the communication ranges r of the wireless tags 708 to 715 located relatively near the conductor 22 improve because of the provision of the conductor 22, compared with the case where the conductor is not provided. However, for the wireless tags 701 to 707, the communication range r decrease compared with the case where the conductor is not provided. The shortest communication range in this case is 15.9 cm (for the wireless tag 705) which is shorter than the shortest communication range when the conductor is not provided. This is presumably because the conductor 22 acts as a reflector for the wireless tags 701 to 707 located near the edge of the stack of the wireless tags 701 to 730, and the radiowaves radiated from these wireless tags are reflected by the conductor 22 in directions different than the direction of the reader/writer antenna 3.

Likewise, as illustrated in Figure 8B, when the conductor 22 is placed at a distance spaced 25 mm away from the center of the antenna of each wireless tag in the y-axis direction, the communication ranges r of the wireless tags 701 to 707 also decrease compared with the case where the conductor is not provided. The shortest communication range in this case is 7.7 cm (for the wireless tag 705) which is shorter than the shortest communication range when the conductor is not provided.

As described above, when the spacing between the conductor 22 and the wireless tags is increased beyond a certain limit, the conductor 22 acts as a reflector for some of the wireless tags, and the communication ranges r of such wireless tags decrease, which is not preferable. It is therefore preferable that the spacing between the conductor 22 and the wireless tags is set so as not to exceed the limit within which electromagnetic coupling can be produced between the conductor 22 and the respective wireless tags. In particular, from the standpoint of improving the wireless tag reading performance compared with the wireless tag reading performance of the prior art system, it is further preferable to determine the spacing between the conductor 22 and the wireless tags so that the shortest communication range becomes longer when the conductor 22 is provided than when the conductor is not provided. More specifically, as can be seen from the results of the third simulation, it is preferable that the spacing between the conductor 22 and the center of each wireless tag is set so as not to exceed 1/16 of the wavelength of the response signal radiated from the wireless tag.

As described above, in the wireless tag reading system according to the first embodiment, the conductor is attached to the partition plate in the container so that electromagnetic coupling occurs between the conductor and the antenna of the wireless tag attached to each article. Since this serves to enhance the antenna gain of the wireless tag, the wireless tag reading system can increase the communication range between the reader/writer antenna and the wireless tag. Further, in the wireless tag reading system according to the present embodiment, the increase in the communication range can be accomplished by simply attaching the conductor to the partition plate in the container. There is therefore no need to add any extra component for assisting signal wave propagation between the reader/writer antenna and the wireless tag attached to each article. Furthermore, the number of conductors attached to such partition plates can be made very small compared with the number of wireless tags to be read. This serves to reduce the overall size of the wireless tag reading system.

Next, a wireless tag reading system according to a second embodiment will be described. In the wireless tag reading system according to the second embodiment, a plurality of conductors for producing electromagnetic coupling with the antennas of the wireless tags are provided within the container, and provisions are made so that the conductors used to actually produce electromagnetic coupling can be selected from among the plurality of conductors according to the number of wireless-tagged articles contained in the container.

The wireless tag reading system according to the second embodiment includes, just like the wireless tag reading system of the first embodiment, a container, a reader/writer antenna, a reader/writer, and a management apparatus. Of these, the reader/writer antenna, the reader/writer, and the management apparatus are identical in configuration and function to the corresponding component elements of the wireless tag reading system of the first embodiment. Therefore, the description of such component elements will not be repeated herein.

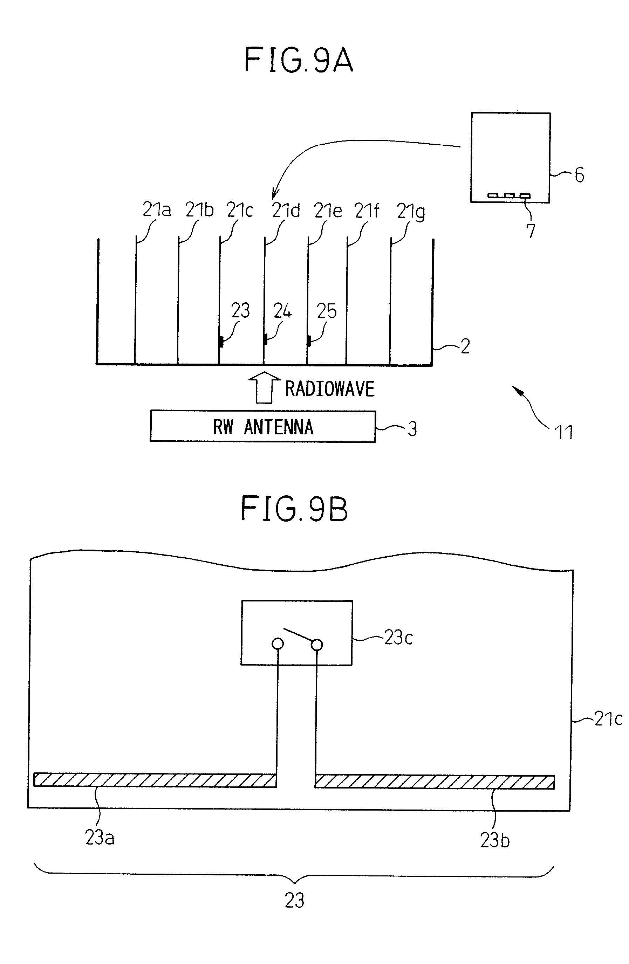

Figures 9A and 9B are, respectively, a schematic cross-sectional side view of the container 2 in the wireless tag reading system 11 according to the second embodiment, and a schematic diagram depicting the configuration of the conductor mounted on a partition plate. As illustrated in Figure 9A, in the wireless tag reading system 11 according to the second embodiment, a plurality of partition plates 21a to 21g are provided in the container 2. The container 2 can hold between each pair of partition plates a predetermined number of articles 6 to be managed. Of the plurality of partition plates, the partition plates 21c, 21d, and 21e are mounted with switched conductors 23 to 25, respectively. Since each switched conductor has the same structure and function, the following description deals only with the switched conductor 23.

As illustrated in Figure 9B, the switched conductor 23 includes two conductors 23a and 23b and a switch 23c.

The conductors 23a and 23b are formed from an electrically conductive material such as aluminum or copper. Each of the conductors 23a and 23b has a length not shorter than one quarter but shorter than one half of the communication wavelength λ, as measured in a direction parallel to the longitudinal direction of the wireless tag 7 attached to the article 6 in the container 2. Further, the conductors 23a and 23b are arranged in a row along the direction parallel to the longitudinal direction of the wireless tag 7. The conductors 23a and 23b are disposed so that the edge of each conductor is spaced 10 mm away in the y-axis direction from the center of the antenna of the wireless tag 7 attached to each article 6 in the container 2.

The switch 23c is a thin switch that can be turned on and off manually or by a control signal from the management apparatus (not illustrated), and is set to electrically connect or disconnect the two conductors 23a and 23b. The switch 23c may be constructed, for example, from a membrane switch. Alternatively, the switch 23c may be constructed from a thin switch of thickness 1 mm or less integrated into an integrated circuit, such as a switch used in a mobile telephone or the like.

When the switch 23c is turned on, the two conductors 23a and 23b are electrically connected. In this case, the combined length of the two conductors 23a and 23b, as measured in the direction parallel to the longitudinal direction of the wireless tag 7, becomes longer than or equal to one half of the communication wavelength λ. Accordingly, the switched conductor 23 can produce electromagnetic coupling with the antenna of the wireless tag 7 attached to each article 6 in the container 2. On the other hand, when the switch 23c is turned off, the two conductors 23a and 23b are electrically disconnected. In this case, the length of each of the two conductors 23a and 23b, as measured in the direction substantially parallel to the longitudinal direction of the wireless tag 7, is shorter than one half of the communication wavelength λ. Accordingly, no electromagnetic coupling occurs between the conductors 23a, 23b and the antenna of the wireless tag 7. By controlling the on/off of the switch 23c in this manner, the wireless tag reading system 11 can adjust the gain of the antenna of the wireless tag 7 attached to each article 6 in the container 2.

Accordingly, by controlling the on/off of the switch of each switched conductor in accordance with the number of articles contained in the container 2, the wireless tag reading system 11 can optimally adjust the communication range between the reader/writer antenna and the wireless tag attached to each article. For example, assume that, when 40 or fewer articles are contained in the container 2, the shortest communication range becomes the longest by turning on the switch of the switched conductor 24 located in the center. Also assume that, when more than 40 articles are contained in the container 2, the shortest communication range becomes the longest by turning on the switches of the switched conductors 23 and 25. In this case, when the number of articles contained in the container 2 is 40 or less, the user should turn off the switches of the switched conductors 23 and 25 and turn on the switch of the switched conductor 24 manually or via the user interface of the management apparatus. On the other hand, when the number of articles contained in the container 2 is larger than 40, the user should turn on the switches of the switched conductors 23 and 25 and turn off the switch of the switched conductor 24 manually or via the user interface of the management apparatus. Here, the relationship between the number of articles contained and the shortest communication range can be determined in advance by performing measurements.

Alternatively, a weight-measuring device may be installed in the bottom of the container 2, and the value measured by the weight-measuring device may be transmitted to the management apparatus so that the management apparatus can automatically control the on/off of the switch of each switched conductor in accordance with the measured value. In this case, a table defining the relationship between the weight of the contents of the container and the on/off setting of the switch of each switched conductor is constructed in advance. The thus constructed table is stored in a storage device internal to the management apparatus. Then, when the measured value of the weight is received from the weight-measuring device, the management apparatus determines the setting of the switch of each switched conductor by referring to the table, and operates each switch in accordance with the thus determined setting.

As described above, in the wireless tag reading system according to the second embodiment, the plurality of conductors mounted on the partition plates of the container are constructed so that the length of each conductor, actually two conductors electrically connected into one, the length being measured in the direction substantially parallel to the wireless tag antenna, can be varied using a switch. With this configuration, even when the number of articles stored in the container changes, the wireless tag reading system can maintain the shortest communication range between the wireless tag and the reader/writer antenna within a range that does not cause a problem in reading the wireless tag.

The present invention is not limited to the above specific embodiments. For example, in the above embodiments, the reader/writer antenna is installed underneath the container. However, the reader/writer antenna may be installed so that the antenna surface of the reader/writer antenna is substantially parallel to the surface to which the conductor is attached. In this case also, since the length of the conductor facing the reader/writer antenna is longer than or equal to one half of the communication wavelength $\lambda$, the same effect as that achieved in the above embodiments can be obtained. Further, the kind and number of articles to be contained in the container can be changed variously according to the purpose. In connection with this, the conductor may be mounted on other than the partition plate. For example, the conductor may be mounted on the inner wall of the container.

Further, the shape of the conductor need not be limited to a rectangular shape. For example, the conductor may be formed in an elliptical shape. Or, it may be curved near its longitudinal end so as to turn toward the reader/writer antenna.

The container may be made replaceable. In this case, it is preferable to attach a wireless tag to the container itself to enable it to be distinguished from other containers. The wireless tag reading system reads, using the reader/writer, the identification information of the wireless tag attached to the container. Then, the wireless tag reading system stores the identification information in the storage unit in the management apparatus by associating it with the identification information of the wireless tag attached to each article contained in the container. In this way, the wireless tag reading system can manage the articles on a container-by-container basis.

In the second embodiment, the lengths of the two conductors in each switched conductor, as measured in the direction parallel to the longitudinal direction of the wireless tag, may be made different from each other. In this case also, the conductors are formed so that the length of each conductor, as measured in the direction parallel to the longitudinal direction of the wireless tag, is shorter than one half of the communication wavelength $\lambda$, but the combined length of the two conductors becomes longer than or equal to one half of the communication wavelength $\lambda$. Each switched conductor may include three or more conductors arranged in a row along the direction parallel to the longitudinal direction of the wireless tag, and two or more switches that are set to electrically connect the conductors in series or not. Here also, each conductor has a length shorter than one half of the communication wavelength $\lambda$, as measured in the direction parallel to the wireless tag, and the combined length of all the conductors, as measured in the direction parallel to the wireless tag, is longer than or equal to one half of the communication wavelength $\lambda$. In this case also, the switched conductor can be electromagnetically coupled with the antenna of the wireless tag by electrically connecting the conductors using the switches.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

**Claims**

1. A container for accommodating at least one article bearing a wireless tag, said container comprising:

   a conductor for electromagnetically coupling with an antenna of said wireless tag when an interrogation signal is radiated from a reader/writer antenna toward said wireless tag or when a response signal is radiated from said wireless tag toward said reader/writer antenna.

2. The container according to claim 1, further comprising a member for partitioning interior space of said container into a plurality of areas, and wherein said conductor is attached to said member.

3. The container according to claim 1, wherein said conductor is located farther away from said reader/writer antenna than said wireless tag attached to said article contained in said container, and a distance from a center of said wireless tag to said conductor, as measured in a direction perpendicular to an antenna surface of said reader/writer antenna, is shorter than or equal to one sixteenth of the wavelength of said response signal.

4. The container according to claim 1, wherein said conductor has a length longer than or equal to one half of the wavelength of said response signal, as measured in a direction parallel to a longitudinal direction of said wireless tag.

5. The container according to claim 1, wherein said container comprises a plurality of said conductors, each having at least a first portion and a second portion arranged in a row along a direction parallel to said wireless tag and a switch that is set to electrically connect or disconnect said first and second conductors, and wherein said first and second conductors each have a length shorter than one half of the wavelength of said response signal, as measured in a direction parallel to a longitudinal direction of said wireless tag, and the sum of the lengths of said first and second conductors, as measured in the direction parallel to the longitudinal direction of said wireless tag, is longer than or equal to one half of the wavelength of said response signal.

6. A wireless tag reading system comprising:

a container for accommodating at least one article bearing a wireless tag;
a reader/writer antenna for transmitting an interrogation signal to said wireless tag and for receiving a response signal from said wireless tag;
a reader/writer for acquiring information concerning said wireless tag from said response signal received from said wireless tag via said reader/writer antenna; and
a conductor attached to said container in such a manner as to electromagnetically couple with an antenna of said wireless tag when said interrogation signal or said response signal is radiated.

7. The wireless tag reading system according to claim 6, wherein said container further comprises a member for partitioning interior space of said container into a plurality of areas, and said conductor is attached to said member.

8. The wireless tag reading system according to claim 6, wherein said conductor is located farther away from said reader/writer antenna than said wireless tag attached to said article contained in said container, and a distance from a center of said wireless tag to said conductor, as measured in a direction perpendicular to an antenna surface of said reader/writer antenna, is shorter than or equal to one sixteenth of the wavelength of said response signal.

9. The wireless tag reading system according to claim 6, wherein said conductor has a length longer than or equal to one half of the wavelength of said response signal, as measured in a direction parallel to a longitudinal direction of said wireless tag.

10. The wireless tag reading system according to claim 6, wherein said container comprises a plurality of said conductors, each having at least a first portion and a second portion arranged in a row along a direction parallel to a longitudinal direction of said wireless tag and a switch that is set to electrically connect or disconnect said first and second conductors, and wherein said first and second conductors each have a length shorter than one half of the wavelength of said response signal, as measured in the direction parallel to the longitudinal direction of said wireless tag, and the sum of the lengths of said first and second conductors, as measured in the direction parallel to the longitudinal direction of said wireless tag, is longer than or equal to one half of the wavelength of said response signal.

# FIG.1

# FIG.2

# FIG.3A

730

z

x          y          ➤ READER/WRITER
                        ANTENNA

701

# FIG.3C

715

22

10mm

# FIG.3B

730          z

10mm

22

716
715          y     ⇨ READER/WRITER
                     ANTENNA

701

## FIG.4A

## FIG.4B

# FIG.5

READER/WRITER ANTENNA

## FIG. 6A

## FIG. 6B

## FIG.7A

## FIG.7B

# FIG.8A

# FIG.8B

## FIG.9A

21a  21b  21c  21d  21e  21f  21g

23  24  25

2

↑ RADIOWAVE

RW ANTENNA — 3

6

7

11

## FIG.9B

23c

21c

23a

23b

23

**EP 2 128 787 A1**

Europäisches Patentamt
European Patent Office
Office européen des brevets

# EUROPEAN SEARCH REPORT

Application Number

EP 09 15 1793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 037425 A (HITACHI LTD) 6 February 2002 (2002-02-06) * figures 1,2 * * abstract * * paragraphs [0021], [0028], [0029] * | 1,2,4,6, 7,9 | INV. G06K7/00 H01Q19/22 H01Q1/22 |
| A | ----- | 5,10 | |
| X | EP 1 522 950 A (TOSHIBA TEC KK [JP]) 13 April 2005 (2005-04-13) * figures 3-9 * * paragraphs [0014] - [0034] * | 1,3,4,6, 8,9 | |
| X | ----- EP 1 701 296 A (FUJI XEROX CO LTD [JP]) 13 September 2006 (2006-09-13) * figures 4,5 * * paragraphs [0039] - [0051] * | 1,2,6,7 | |
| X,D | ----- JP 2005 327099 A (TOSHIBA TEC KK) 24 November 2005 (2005-11-24) * figure 1 * * abstract * * paragraphs [0007], [0008] * ----- | 1,6 | TECHNICAL FIELDS SEARCHED (IPC) G06K H01Q |

The present search report has been drawn up for all claims

| Place of search | Date of completion of the search | Examiner |
|---|---|---|
| Munich | 22 September 2009 | Grob, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 1793

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2009

| Patent document cited in search report | | Publication date | Patent family member(s) | | Publication date |
|---|---|---|---|---|---|
| JP 2002037425 | A | 06-02-2002 | JP | 3788211 B2 | 21-06-2006 |
| EP 1522950 | A | 13-04-2005 | DE 602004006348 T2 | | 03-01-2008 |
| | | | JP | 2005135354 A | 26-05-2005 |
| | | | US | 2006097047 A1 | 11-05-2006 |
| | | | US | 2005077353 A1 | 14-04-2005 |
| EP 1701296 | A | 13-09-2006 | CN | 1831841 A | 13-09-2006 |
| | | | JP | 2006246372 A | 14-09-2006 |
| | | | KR | 20060097536 A | 14-09-2006 |
| | | | US | 2006208899 A1 | 21-09-2006 |
| JP 2005327099 | A | 24-11-2005 | JP | 3851639 B2 | 29-11-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008137229 A

- JP 2005327099 A

**Non-patent literature cited in the description**

- **H. W. Son ; C.S. Pyo.** Design of RFID tag antennas using an inductively coupled feed. *IEEE, Electronics Letters,* September 2005, vol. 41 (18), 994-996